# EUROPÄISCHE PATENTSCHRIFT

(11) **EP 2 060 069 B1**
(45) Veröffentlichungstag und Bekanntmachung des Hinweises auf die Patenterteilung: **17.02.2016**
(21) Anmeldenummer: 07801675.5
(22) Anmeldetag: 16.08.2007
(51) Int. Cl.: H04W 84/10, H04W 74/02, F41G 3/26

(54) **KOMMUNIKATIONSVERFAHREN ZWISCHEN KOMPONENTEN EINES DRAHTLOSEN KURZSTRECKENNETZWERKES UND NETZWERKKOMPONENTE**
COMMUNICATION METHOD BETWEEN COMPONENTS IN A WIRELESS SHORT HAUL NETWORK, AND NETWORK COMPONENT
PROCÉDÉ DE COMMUNICATION ENTRE DES COMPOSANTS D'UN RÉSEAU DE COMMUNICATION DE COURTE DISTANCE SANS FIL ET COMPOSANT DE RÉSEAU

(30) Priorität: 09.09.2006 DE 102006042432
(43) Veröffentlichungstag der Anmeldung: 20.05.2009
(73) Patentinhaber: Rheinmetall Defence Electronics GmbH, 28309 Bremen (DE)
(72) Erfinder: WENDT, Klaus, 27367 Sottrum (DE); EISENHAUER, Joachim, 28211 Bremen (DE)
(74) Vertreter: Greif, Thomas
(86) Internationale Anmeldenummer: PCT/EP2007/007213
(87) Internationale Veröffentlichungsnummer: WO 2008/028557

(56) Entgegenhaltungen:
- CA-A1- 2 216 302
- DE-C1- 3 427 489
- US-A- 6 141 336
- US-A1- 2004 121 292
- US-B1- 6 975 859
- ANONYMOUS: "Global System for Mobile Communications (GSM)" WIKIPEDIA, THE FREE ENCYCLOPEDIA, [Online] 24. November 2005 (2005-11-24), XP002467516 Wikipedia Gefunden im Internet: URL:http://web.archive.org/web/20051124142 501/http://en.wikipedia.org/wiki/Gsm> [gefunden am 2008-02-05]
- ANONYMOUS: "Infrared Data Association" WIKIPEDIA, THE FREE ENCYCLOPEDIA, [Online] XP002467518 Wikipedia Gefunden im Internet: URL:http://en.wikipedia.org/wiki/Infrared_ Data_Association>

## Beschreibung

Die vorliegende Erfindung betrifft ein Kommunikationsverfahren zwischen Komponenten eines drahtlosen Kurzstreckennetzwerkes im Rahmen einer Gefechtsfeldsimulation sowie eine Netzwerkkomponente zur Durchführung des Verfahrens.

Bekannterweise werden in der Schießausbildung mit direkt gerichteten Waffen und in Gefechtsübungszentren Duellsimulatoren verwendet. Dabei wird die Information über den Schießenden, den Schuss, über die Art der Waffe und der verwendeten Munition mittels gerichtetem und codiertem Infrarot-Laserstrahl auf das Ziel übertragen. Auf dem Teilnehmer, der ein potentielles Ziel darstellt, sind mehrere Detektoren verteilt, die den auftreffenden Laserstrahl detektieren und die per Kabel mit einer Auswerte-Elektronik, der sogenannten Teilnehmereinheit, verbunden sind, die von dem Teilnehmer getragen wird. Bei dem Teilnehmer handelt es sich beispielsweise um eine Person oder ein Fahrzeug.

Sensorabstand und -position sind in Abhängigkeit vom Durchmesser des auftreffenden Laserstrahls so gewählt, dass eine sinnvolle Aussage über den Auftreffpunkt des Strahls auf den Teilnehmer und damit über die in der Realität eintretende Waffenwirkung gemacht werden kann. Dazu ist in der Teilnehmereinheit ein Auswertesystem vorhanden, das nach einem hinterlegten Verwundbarkeitsmodell den Treffer auswertet. Zusätzlich enthält die Teilnehmereinheit ein Funksystem, das zur Treffermeldung mit der Übungsleitzentrale in Funkkontakt treten kann.

Ein derartiges, aus dem Stand der Technik bekanntes System weist den Nachteil auf, dass bei der Benutzung im militärischen Umfeld häufig Beschädigungen der Sensoren oder der Kabelverbindungen eintreten, die zu einer Funktionalitätseinschränkung oder dem Ausfall des gesamten Sensorsystems und damit des Übungsteilnehmers führen können.

Zur Vermeidung von Beschädigungen der Kabelverbindungen ist vorgeschlagen worden, die Detektoren über eine Funkverbindung wie beispielsweise Bluetooth mit der Teilnehmereinheit zu verbinden. Eine derartige Funkverbindung über Bluetooth hat jedoch den Nachteil eines hohen Energiebedarfs. Dadurch wird entweder die Betriebsdauer des Sensorsystems stark beschränkt oder ein entsprechend groß dimensionierter Akkumulator notwendig, der unhandlich und schwer ist.

Aus der CA 2 216 302 A1 ist ein Kommunikationsverfahren zwischen Komponenten eines drahtlosen Kurzstreckennetzwerkes im Rahmen einer Gefechtsfeldsimulation bekannt, wobei eine Komponente als Master und die anderen Komponenten als Slaves ausgebildet sind und die Slaves in einem Betriebskanal synchron oder asynchron Daten an den Master übertragen.

Außerdem ist sowohl aus der CA 2 216 302 A1 als auch aus der US 2004/121292 A1 eine Netzwerkkomponente, aufweisend einen Sensor, insbesondere einen IR-Sensor, einen Signalprozessor und ein Kurzstrecken-Funkmodul bekannt.

Der Erfindung liegt daher die Aufgabe zugrunde, ein Kommunikationsverfahren zwischen Komponenten eines drahtlosen Kurzstreckennetzwerkes im Rahmen einer Gefechtsfeldsimulation bereitzustellen, das einen geringen Energiebedarf und damit eine lange Betriebsdauer aufweist. Diese Aufgabe wird erfindungsgemäss durch ein Kommunikationsverfahren gemäss Anspruch 1 gelöst. Eine Netzwerkkomponente zur Durchführung des Verfahrens ist in Anspruch 14 angegeben. Vorteilhafte Ausgestaltungsformen sind den abhängigen Patentansprüchen zu entnehmen. Bei dem erfindungsgemässen Kommunikationsverfahren zwischen Komponenten eines drahtlosen Kurzstreckennetzwerkes im Rahmen einer Gefechtsfeldsimulation ist eine Komponente als Master und die anderen Komponenten als Slave ausgebildet. Dabei übernimmt bevorzugt die zentrale Teilnehmereinheit die Funktion des Master, während die übrigen Komponenten, wie Waffen oder Detektoreinheiten, die Slaves darstellen. Die Slaves besitzen eine eindeutige Identifikation und übertragen ihre Daten in einem Betriebkanal synchron oder asynchron an den Master. Bei den Daten handelt es sich beispielsweise um die Information, dass eine Waffe abgefeuert oder eine Detektoreinheit getroffen wurde. Synchrone Slaves senden Daten in ihnen fest zugeordneten Zeitschlitzen, während asynchrone Slaves Daten ereignisbasiert senden. Dadurch wird sichergestellt, dass synchrone Slaves, beispielsweise Waffen, Daten nach einer gewissen maximalen Reaktionszeit an den Master senden können. Die synchrone Kommunikation erlaubt ferner die Datenübertragung vom Master auf einen synchronen Slave.

Bevorzugt hört der Master den Betriebskanal regelmässig für eine festgelegte Zeitspanne ab. Dadurch, dass der Master nicht durchgängig in Empfangsbereitschaft ist, reduziert sich sein Energiebedarf signifikant, insbesondere bezüglich des Funkmoduls und des Signalprozessors.

Besonders bevorzugt hört der Master den Betriebskanal zu Beginn der Zeitfenster der synchronen Slaves ab. Ein sychroner Slave beginnt die Aussendung der Daten innerhalb einer festgelegten Zeitspanne nach Beginn seines Zeitfensters. Hat der Master innerhalb dieser Zeitspanne keine Datenübertragung vom synchronen Slave feststellen können, so schaltet er sein Funkmodul für den Rest des Zeitfensters ab und reduziert damit seinen Energiebedarf. Der Master bestätigt den Empfang der Daten durch Aussendung einer entsprechenden Nachricht.

In einer Ausgestaltungsform der Erfindung synchronisieren die synchronen Slaves ihre Zeitbasis auf eine regelmässig vom Master ausgesendete Bake. Dadurch wird sichergestellt, dass die Zeitbasen des Masters und der synchronen Slaves nicht über ein kritisches Maß hinaus auseinanderlaufen. Optional enthält die Bake neben der Zeitinformation auch Befehle und/oder sonstige Nachrichten für einen oder mehrere synchrone Slaves. Neben den regelmäßigen Baken besteht die Möglichkeit der Aussendung von Sonderbaken, beispielsweise beim Auftreten von Ereignissen.

Sind Daten vom Master an einen synchronen Slave zu versenden, beispielsweise der Befehl zum Sperren einer Waffe, so wird das Bereitstehen der Daten in der Bake signalisiert. Der angesprochene synchrone Slave sendet in seinem Zeitschlitz eine Nachricht an den Master, nach deren Erhalt der Master die Daten an den synchronen Slave sendet. Der synchrone Slave bestätigt den Erhalt der Daten mit einer weiteren Nachricht an den Master. Diese Kommunikation findet im Betriebskanal statt.

Bevorzugt hören die Slaves auf dem Betriebskanal, bevor sie senden. Ein Slave sendet in diesem Fall nur, wenn er keine Aktivität auf dem abgehörten Kanal festgestellt hat. Dadurch wird verhindert, dass zwei oder mehr Slaves gleichzeitig senden und auf dem Betriebskanal eine Kollision auftritt. Besonders bevorzugt wartet jeder Slave vor dem Abhören des Betriebskanals eine ihm zugeordnete Zeitspanne. Dies betrifft insbesondere asynchrone Slaves, um zu verhindern, dass zwei oder mehr asynchrone Slaves bei gleichzeitigem Auftreten eines oder mehrerer Ereignisse für eine exakt gleiche Zeitspanne den Betriebskanal abhören und gleichzeitig senden.

Ein asynchroner Slave sendet bei Auftreten eines Ereignisses Requests an den Master, bis der Master den Request beantwortet. Bei dem Ereignis handelt es sich beispielsweise um die Detektion eines Treffers. Der asynchrone Slave sendet die Requests bevorzugt im Betriebskanal. Vor Absendung des ersten Requests hört der asynchrone Slave, wie vorstehend beschrieben, zunächst den Betriebskanal ab, um Kollisionen zu vermeiden. Zwischen der Aussendung von Requests hört der asynchrone Slave ebenfalls den Betriebskanal ab und wartet auf die Antwort vom Master.

In einer Ausgestaltungsform der Erfindung fordert der Master nach dem Empfang eines Request eines asynchronen Slaves sequentiell alle asynchronen Slaves zur Übertragung von Daten auf. Hat ein asynchroner Slave keine Daten zu versenden, beispielsweise weil er nicht getroffen wurde, so reagiert er nicht auf die Sendeaufforderung des Master. Entweder ignoriert der Slave die Aufforderung des Master absichtlich oder er befindet sich zur Energieeinsparung in einem Schlafmodus, so dass er die Aufforderung des Master nicht registriert.

Bevorzugt bestätigt der Master den Empfang von Daten von einem Slave. Empfängt der Slave diese Bestätigung des Master nicht, so sendet er seine Daten erneut. Ein synchroner Slave sendet die Daten in dem nächsten ihm zugewiesenen Zeitfenster, während ein asynchroner Slave erneut die Aussendung von Requests beginnt und damit die vorstehend beschriebene Prozedur einleitet. In einer besonderen Ausgestaltungsform der Erfindung enthält die Nachricht, die der Master einem asynchronen Slave zur Empfangsbestätigung sendet, gleichzeitig die Sendeaufforderung für den nächsten asynchronen Slave.

In einer Ausgestaltungsform der Erfindung sendet ein Slave, insbesondere ein synchroner Slave, regelmäßig eine Alive-Meldung an den Master. Der Master überwacht auf Grundlage dieser Meldung den Status und/oder die Anwesenheit des Slaves.

Das erfindungsgemäße Kommunikationsverfahren bietet die Möglichkeit, während des Betriebes zusätzliche Slaves in das Netzwerk aufzunehmen. Dazu hört der Master regelmäßig einen Assoziierungskanal ab. Auf diesem Assoziierungskanal sendet ein zu assoziierender, also in das Netzwerk aufzunehmender Slave Requests, bis der Master antwortet. Auch für den Assoziierungskanal gilt, dass optional die Komponenten den Kanal zunächst abhören, bevor sie Daten senden.

Auf die Antwort des Masters hin sendet der Slave auf dem Assoziierungskanal Geräteinformationen an den Master. Zu den Geräteinformationen zählen beispielsweise die Art bzw. Funktion des Slaves, die Seriennummer, der Status, verwendbare Codes oder die Software-Revision. Daraufhin sendet der Master dem zu assoziierenden Slave Netzwerkinformationen und weist ihm eine Identifikationsnummer zu. Bei den Netzwerkinformationen handelt es sich beispielsweise um die Identifikation des Teilnehmers bzw. des Netzwerkes, den Betriebskanal oder den verwendeten Code. Als Codes werden beispielsweise OSAG oder MILES verwendet. Der Slave quittiert den Empfang der Netzwerkinformationen mit einer Alive-Meldung.

Üblicherweise umfasst eine Gefechtsfeldsimulation mehrere Teilnehmer, die jeweils über ein eigenes drahtloses Kurzstreckennetzwerk verfügen. Nach Möglichkeit ist jedem Netzwerk ein eigener Betriebskanal zugewiesen. Ist dies aufgrund von begrenzten Frequenzen nicht möglich, teilen sich mehrere Teilnehmer einen Betriebskanal. Jede Aussendung auf einem Betriebskanal enthält eine Netzwerkkennung, aufgrund derer sie einem Netzwerk zugeordnet werden kann. Der Assoziierungskanal wird von allen Netzwerken gemeinsam genutzt.

Gehen bei dem zu assoziierenden Slave Bestätigungen mehrerer Master ein, so wird bevorzugt das Netzwerk mit der höchsten empfangenen Leistung ausgewählt. Dadurch wird sichergestellt, dass sich der Master und der zu assoziierende Slave am gleichen Teilnehmer befinden.

Diese Art der Assoziierung ist beispielsweise dann notwendig, wenn der Teilnehmer eine neue Waffe aufnimmt oder vorbereitet, beispielsweise den Splint einer Handgranate entfernt, oder ein Sensor hinzugefügt bzw. ausgetauscht wird.

Bei der Erstinbetriebnahme des Netzwerkes werden die einzelnen Komponenten an dem Teilnehmer angebracht und über ein Initialisierungstool, beispielsweise ein optisches Initialisierungstool, mit Informationen zu ihrer Position versehen. Anschliessend hören sie regelmässig kurzzeitig den Assoziierungskanal ab. Auf Knopfdruck sendet der Master auf dem Assoziierungskanal Requests aus, die die Slaves mit ihren Geräteinformationen beantworten und daraufhin vom Master Netzwerkinformationen erhalten. Diese Vorgehensweise hat den Vorteil, dass auf dem Assoziierungskanal nur der jeweils durch Knopfdruck ausgewählte Master sendet und nur die aktivierten Slaves antworten. Damit kann die Inbetriebnahme des Netzwerkes auch bei dicht beieinanderstehenden Teilnehmern eindeutig durchgeführt werden, indem die Netzwerke nacheinander initialisiert werden.

Erfindungsgemäß weist eine Netzwerkkomponente zur Durchführung des vorstehenden Kommunikationsverfahrens einen Sensor, insbesondere einen Infrarot(IR)-Sensor, einen Signalprozessor und ein Kurzstrecken-Funkmodul auf. Mittels des Sensors werden Signale empfangen und durch den Signalprozessor ausgewertet. Dieser entscheidet, ob ein Treffer vorliegt und entsprechende Daten gemäss dem vorstehend geschilderten Verfahren über das Kurzstrecken-Funkmodul an den Master gesendet werden. Bevorzugt ist die Netzwerkkomponente in einen Schlafmodus versetzbar, aus dem sie durch ein auf den Sensor treffendes Signal weckbar ist. Im Schlafmodus ist beispielsweise das Kurzstrecken-Funkmodul oder der Signalprozessor ganz oder teilweise deaktiviert, um den Energiebedarf der Netzwerkkomponente zu senken. Erst bei einem Treffer wird die Netzwerkkomponente vollständig geweckt.

In einer weiteren Ausgestaltungsform der Erfindung weist die Netzwerkkomponente einen Signalverstärker zur Verstärkung der Signale des Sensors auf. Die Empfindlichkeit der Netzwerkkomponente wird durch den Signalverstärker gesteigert, so dass die Energie des von der Waffe ausgesendeten Signals reduziert werden kann.

Das vorstehend beschriebene Kommunikationsverfahren erlaubt die Implementierung eines Kurzstrecken-Funknetzwerkes, dessen Komponenten einen äußerst geringen Energiebedarf aufweisen. Naturgemäß werden die Detektoreinheiten an einen Teilnehmer nur sehr selten getroffen, so dass sich diese beinahe während der gesamten Betriebsdauer im Schlafmodus befinden. Auch der Master weist einen reduzierten Energiebedarf auf, da er den Betriebs- bzw. Assoziierungskanal nicht dauerhaft abhört.

Die Erfindung soll anhand mehrerer Ausführungsbeispiele näher erläutert werden. Dabei zeigt:
- Figur 1: einen schematischen Aufbau eines drahtlosen Kurzstreckennetzwerkes,
- Figur 2: die Aktivitäten des Master über die Zeit,
- Figur 3: die Kommunikation zwischen dem Master und einem synchronen Slave,
- Figur 4: die Kommunikation des Master mit drei asynchronen und einem synchronen Slave
- Figur 5: den Kommunikationsablauf bei der Datenübertragung vom Master auf einen synchronen Slave und
- Figur 6: den Kommunikationsablauf bei Assoziierung eines synchronen Slaves.

Das folgende Ausführungsbeispiel bezieht sich auf ein drahtloses Kurzstreckennetzwerk, welches beispielhaft mit einer Baudrate von 38400 Bit pro Sekunde in einem ISM-Band bei 868 Megahertz betrieben wird.

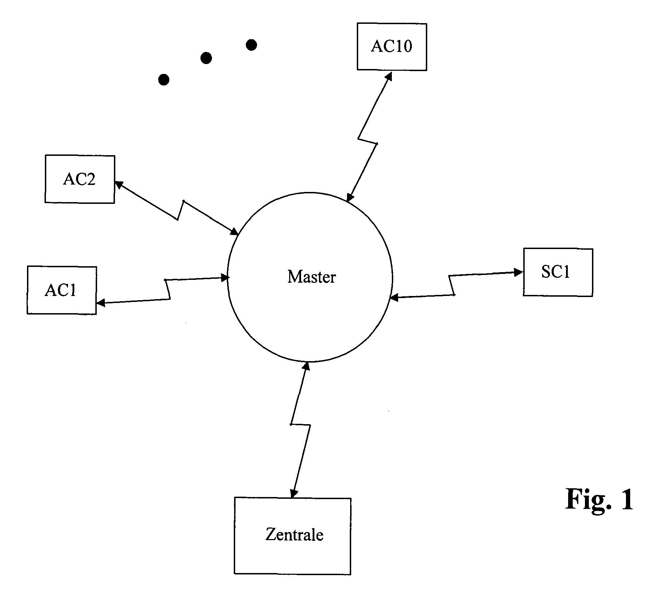

In Figur 1 ist schematisch ein drahtloses Kurzstreckennetzwerk dargestellt, welches ein Teilnehmer einer Gefechtsfeldsimulation bei sich trägt. Im vorliegenden Beispiel handelt es sich bei dem Teilnehmer um einen Soldaten, der die Master-Komponente des Netzwerkes in Form einer Anzeige- und Bedieneinheit am Handgelenk trägt. Auf dem Körper des Soldaten verteilt angeordnet sind zehn Infrarot-Detektoren, die als asynchrone Slaves AC1 - AC10 per Funk mit dem Master verbunden sind. Weiterhin trägt der Soldat eine Waffe, die als synchroner Slave SC1 drahtlos mit dem Master verbunden ist. Der Master ist mittels einer Funkverbindung mit hoher Reichweite, beispielsweise TETRA-Funk (TErrestrial Trunked RAdio), mit einer Zentrale verbunden, die in Kontakt mit einer Vielzahl einzelner Kurzstreckennetzwerke steht.

Der für die drahtlosen Kurzstreckennetzwerke zur Verfügung stehende Frequenzbereich wird in einen Assoziierungskanal sowie einen oder mehrere Betriebskanäle aufgeteilt. Nach Möglichkeit nutzt jedes drahtlose Kurzstreckennetzwerk zur Datenübertragung einen eigenen Betriebskanal. Der Assoziierungskanal, der dazu dient, neue Komponenten in ein Netzwerk aufzunehmen, wird von allen Kurzstreckennetzwerken genutzt.

Bei ihrer Betätigung sendet die Waffe einen gerichteten und codierten Infrarot-Laserstrahl aus. Dabei enthält die Codierung Informationen über den Schießenden, den Schuss, über die Art der Waffe sowie der verwendeten Munition. Ihr Abfeuern meldet die Waffe SC1 an den Master.

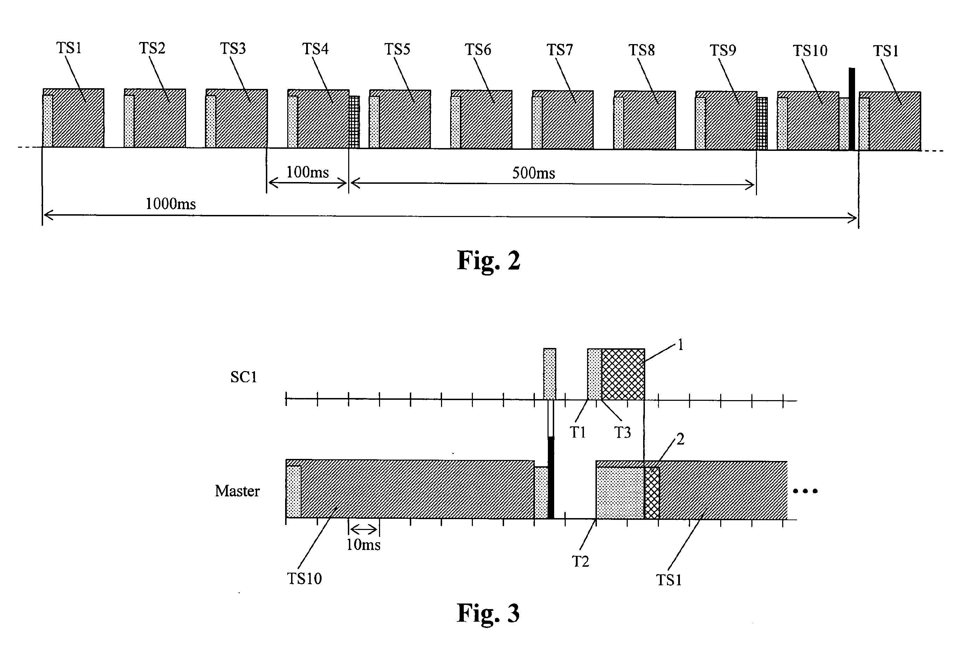

Figur 2 zeigt die Aktivitäten des Master über der Zeit. Aus Gründen der Übersichtlichkeit sind die dargestellten Zeiträume in Figur 2 nicht maßstabsgerecht. Die Zeitachse ist in zehn Zeitfenster TS1 bis TS10 unterteilt, die alle 100 Millisekunden beginnen und jeweils 80 Millisekunden lang sind. Die Zeitfenster wiederholen sich periodisch alle 1000 Millisekunden und sind schraffiert dargestellt. Jedem synchronen Slave ist ein Zeitfenster zugeteilt, in dem er seine Daten an den Master übertragen darf. Zu Beginn jedes Zeitfensters hört der Master für eine punktiert dargestellte Zeitdauer, hier 5 Millisekunden, den Betriebskanal ab, ob ein synchroner Slave seine Datenübertragung begonnen hat. Wird keine Datenübertragung festgestellt, so schaltet der Master zur Energieeinsparung seinen Funkempfänger für die restliche Dauer des Zeitfensters ab.

In regelmässigen Abständen sendet der Master auf dem Betriebskanal eine in Figur 2 schwarz dargestellte Bake aus, auf die die synchronen Slaves ihre Zeitbasis synchronisieren. Im vorliegenden Ausführungsbeispiel wird alle 5 Sekunden eine 2,083 Millisekunden lange Bake übertragen. Dadurch wird gewährleistet, dass der Master die für Funkanwendungen im ISM-Band vorgeschriebene maximale Sendedauer von 0,1 % innerhalb einer Stunde einhält. Vor der Aussendung der Bake hört der Master den Betriebskanal kurzzeitig, hier für 5 Millisekunden, ab, um eine Kollision von Funkaussendungen zu verhindern. Bei Eintritt eines Ereignisses werden optional zusätzlich Sonderbaken ausgesendet, beispielsweise um einen Slave zum Abruf von Daten zu veranlassen.

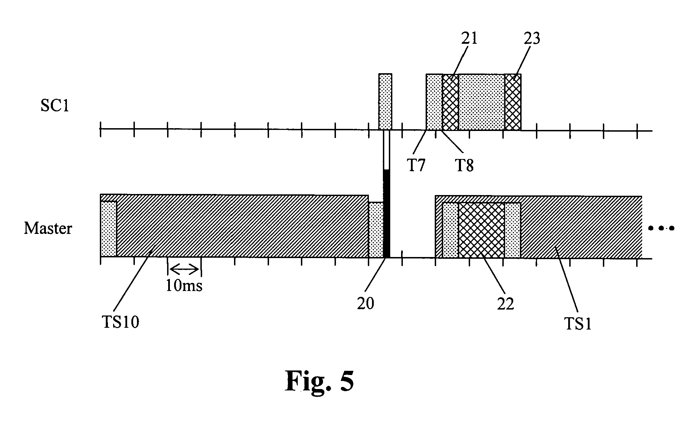

Alle 500 Millisekunden hört der Master für eine gewisse Zeit, hier 5 Millisekunden und in Figur 2 kariert dargestellt, den Assoziierungskanal auf Funkaktivität einer zu assoziierenden Netzwerkkomponente ab. Der Vorgang der Assoziierung wird später anhand von Figur 5 detailliert beschrieben.

Figur 3 zeigt die Aktivitäten des Master und des synchronen Slaves SC1 bei der synchronen Datenübertragung. Der dargestellte Ausschnitt der Zeitachse beginnt mit dem Zeitschlitz TS10, in dem der Master für 5 Millisekunden den Betriebskanal abhört und seinen Funkempfänger dann zur Energieeinsparung abschaltet, da keine Funkaktivität herrscht. Zum Zeitpunkt T2 beginnt der dem synchronen Slave SC1 zugeordnete Zeitschlitz TS1. Zu einem Zeitpunkt T1 beginnt der synchrone Slave SC1, den Betriebskanal auf Funkaktivitäten abzuhören. Da keine derartige Funkaktivität festzustellen ist, beginnt der synchrone Slave SC1 zum Zeitpunkt T3 mit der Aussendung seiner Daten 1. Den Empfang dieser Daten quittiert der Master mit einer entsprechenden Nachricht 2.

Der Zeitpunkt, zu dem der synchrone Slave SC1 das Abhören des Betriebskanals beginnt, ist so gewählt, dass der Zeitpunkt T3 innerhalb einer gewissen Zeitspanne, hier 5 Millisekunden, nach Beginn des Zeitfensters TS1 liegt. Dies ist darin begründet, dass der synchrone Slave SC1 seine Datenaussendung frühestens mit Anbruch des ihm zugeordneten Zeitschlitzes TS1 beginnen darf. Andererseits muss die Datenübertragung innerhalb einer gewissen Zeitspanne, hier 5 Millisekunden, nach Anbruch des Zeitfensters TS1 beginnen, da der Master seinen Funkempfänger ansonsten für den Rest des Zeitfensters abschalten würde.

In Figur 3 dargestellt ist ebenfalls die Aussendung einer Bake durch den Master. Vor der Aussendung der Bake hört der Master den Betriebskanal ab, um Kollisionen zu vermeiden. Der synchrone Slave SC1 hört den Betriebskanal einen Zeitraum um die vermutete Aussendung der Bake ab und synchronisiert seine Zeitbasis bei Empfang der Bake auf die Uhr des Master. Zum Ausgleich von Zeitabweichungen der Uhren des Master und des synchronen Slaves SC1 hört dieser den Betriebskanal für einen Zeitraum ab, der länger ist als die Länge der Bake. Wird eine erwartete Bake nicht empfangen, so erweitert ein synchroner Slave bevorzugt den Empfangszeitraum beim nächsten Abhören des Betriebskanals auf eine Bake, um größer werdende Zeitabweichungen zu kompensieren.

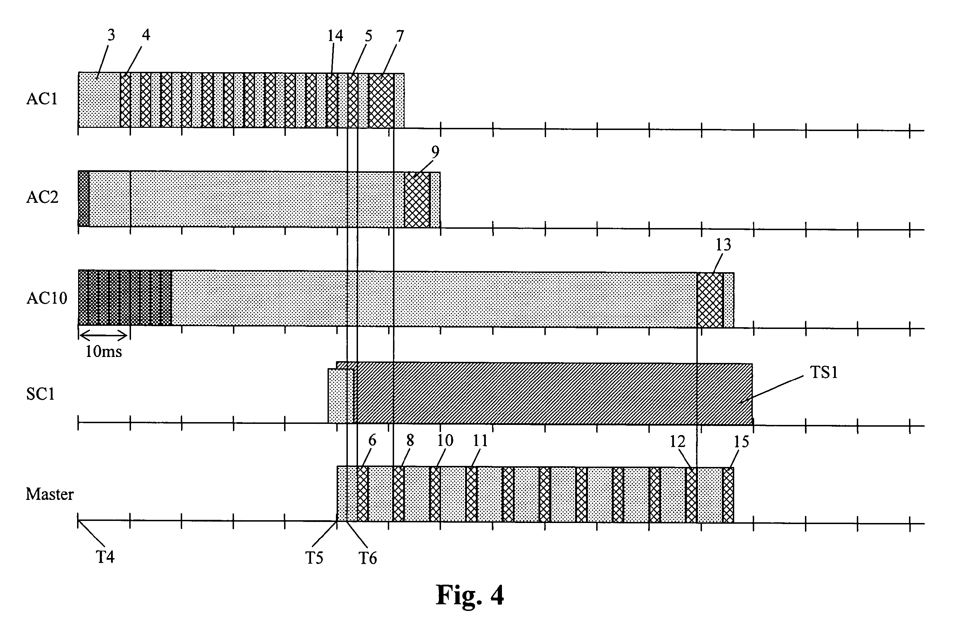

Figur 4 zeigt den Ablauf der Kommunikation zwischen drei asynchronen Slaves AC1, AC2 und AC10 sowie dem synchronen Slave SC1 mit dem Master. Dieser Kommunikation liegt das beispielhafte Szenario zugrunde, dass die Sensoren der asynchronen Slaves AC1, AC2 und AC10 zum Zeitpunkt T4 von einem Laserstrahl getroffen wurden und die Waffe SC1 abgefeuert wurde.

Nach der Detektion des Treffers zum Zeitpunkt T4 hört der asynchrone Slave AC1 den Betriebskanal für einen festgelegten Zeitraum 3, hier 8 Millisekunden, auf Funkaktivität ab und beginnt dann die Aussendung eines Requests 4, hier der Länge zwei Millisekunden, an den Master. Nach Aussendung des Requests 4 hört der asynchrone Slave AC1 den Betriebskanal, hier für zwei Millisekunden, ab. Wird in dieser Zeit keine Antwort des Master empfangen, so wird der Request erneut versendet.

Zum Zeitpunkt T5, an dem der Zeitschlitz TS1 beginnt, hört der Master den Betriebskanal ab und empfängt zum Zeitpunkt T6 den Request 5 des asynchronen Slaves AC1. Daraufhin sendet der Master im Betriebskanal eine an den asynchronen Slave AC1 gerichtete Sendeaufforderung 6. Auf die Aufforderung 6 hin sendet der asynchrone Slave AC1 seine Daten 7 im Betriebskanal an den Master. Nach Empfang der Daten 7 sendet der Master eine Nachricht 8, die den Empfang der Daten 7 bestätigt und den asynchronen Slave AC2 zu senden auffordert. Auf diese Aufforderung hin sendet nun der asynchrone Slave AC2 seine Daten 9 an den Master, der wiederum den Empfang quittiert und den asynchronen Slave AC 3 zu senden auffordert. Da der asynchrone Slave AC 3 nicht getroffen wurde, ignoriert er die Sendeaufforderung 10 des Master. Nach Ablauf des für die Datenaussendung des asynchronen Slaves AC 3 reservierten Zeitspanne sendet der Master eine an den asynchronen Slave AC 4 gerichtete Sendeaufforderung 11. Dies setzt sich fort, bis der Master den asynchronen Slave AC10 zu senden auffordert. Da dieser getroffen wurde, antwortet er auf die Sendeaufforderung 12 des Master mit der Aussendung von Daten 13. Der Empfang dieser Daten wird mit der Nachricht 15 vom Master quittiert.

Um zu verhindern, dass bei dem gleichzeitigen Auftreten des Treffers zum Zeitpunkt T4 an den asynchronen Slaves AC1, AC2 und AC10 die Slaves das Abhören des Betriebskanals und nach dem Abhören das Aussenden der Requests gleichzeitig beginnen und so eine Kollision auf der Funkschnittstelle hervorrufen, beginnt jeder asynchrone Slave das Abhören des Betriebskanals erst nach einer ihm zugeordneten Wartezeit, die in Figur 4 kariert dargestellt ist. Im vorliegenden Ausführungsbeispiel wartet der asynchrone Slave AC2 zwei Millisekunden und der asynchrone Slave AC10 achtzehn Millisekunden nach Auftreten des Treffers vor dem Abhören des Betriebskanals. So stellt der asynchrone Slave AC2 zwei Millisekunden vor Ablauf des Abhörzeitraumes fest, dass der asynchrone Slave AC1 den Request 4 versendet, und unterbindet daher die Aussendung eines eigenen Requests. Gleiches gilt, mit einer anderen Verzögerung, für den asynchronen Slave AC10.

Kurz vor Beginn des ihm zugeordneten Zeitschlitzes TS1 beginnt der synchrone Slave SC1, den Betriebskanal auf Funkaktivität abzuhören. Dabei stellt der synchrone Slave SC1 fest, dass der asynchrone Slave AC1 einen Request 14 sendet, und unterdrückt daher die eigene Aussendung von Daten bis zum nächsten ihm zugeordneten Zeitschlitz.

Figur 5 zeigt die Kommunikation bei der Datenübertragung vom Master auf den synchronen Slave SC1. In der Bake 20 signalisiert der Master dem synchronen Slave SC1, dass Daten zum Abruf bereitstehen. Zum Zeitpunkt T7 kurz vor Beginn des ihm zugeordneten Zeitschlitzes TS1 beginnt der synchrone Slave SC1, den Betriebskanal auf Funkaktivität abzuhören. Da keine Aktivität festzustellen ist, sendet der synchrone Slave SC1 zum Zeitpunkt T8 eine Sendeaufforderung 21 an den Master. Dieser sendet daraufhin die Daten 22 an den synchronen Slave SC1, der den Erhalt der Daten 22 mit der Nachricht 23 quittiert.

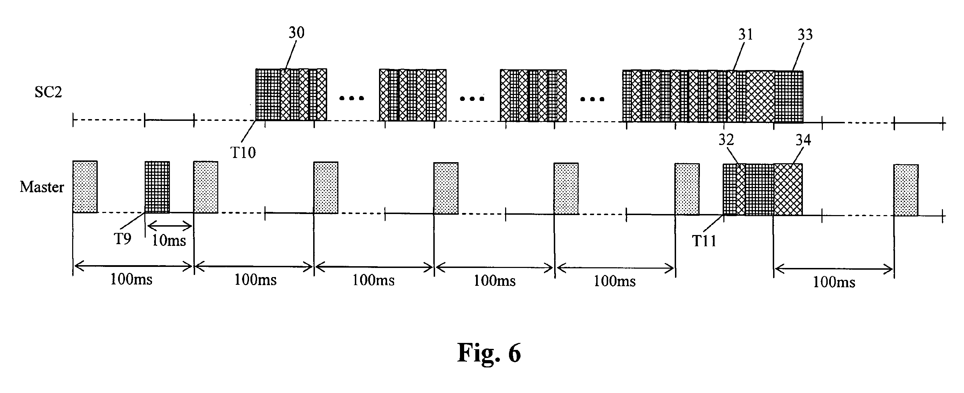

Figur 6 zeigt die Aktivitäten des Master und eines synchronen Slaves SC2, der in das Netzwerk aufgenommen werden soll. Wie bereits aus Figur 2 bekannt, hört der Master zu Beginn jedes Zeitschlitzes, hier alle 100 Millisekunden, den Betriebskanal kurzzeitig, hier für 5 Millisekunden, auf Aussendungen der Slaves ab. Dies ist in Figur 6 punktiert dargestellt. Weiterhin hört der Master alle 500 Millisekunden für 5 Millisekunden auf dem Assoziierungskanal, was kariert dargestellt ist. Zu einem Zeitpunkt T9 stellt der Master auf dem Assoziierungskanal keine Aktivität fest. Zum Zeitpunkt T10 soll der synchrone Slave SC2 in das Netzwerk aufgenommen werden. Dazu hört er zunächst für 5 Millisekunden auf dem Assoziierungskanal, bevor er einen Request 30, hier der Länge zwei Millisekunden, an den Master sendet. Der synchrone Slave SC2 wartet dann für eine gewisse Zeit, hier ebenfalls zwei Millisekunden, auf eine Antwort des Master. Geht keine Antwort ein, so sendet der zu assoziierende Slave SC2 periodisch weitere Requests und hört dazwischen auf dem Assoziierungskanal.

Zum Zeitpunkt T11 hört der Master wieder den Assoziierungskanal ab und registriert dabei den Request 31 des zu assoziierenden Slaves SC2. Als Antwort auf den Request sendet der Master eine Bestätigung 32 auf dem Assoziierungskanal. Auf diese Bestätigung 32 hin übermittelt der synchrone Slave SC2 Geräteinformationen 33 an den Master. Diese Geräteinformationen 33 umfassen die Art des Slaves, seine Seriennummer, den Status, den verwendbaren Code und die Software-Revision. Der Master teilt dem zu assoziierenden Slave SC2 eine Identifikationsnummer zu und sendet Netzwerkinformationen 34 an den synchronen Slave SC2. Die Netzwerkinformationen 34 umfassen die Identifikation des Teilnehmers, die Identifikation des Netzwerkes, den Betriebskanal, die lokale Adresse des neuen Slaves und den verwendeten Code. Durch die Identifikationsnummer wird einem synchronen Slave automatisch ein Zeitschlitz zugeordnet. Auch bei asynchronen Slaves dient die Identifikationsnummer der Kontrolle des Kommunikationsprozesses. So berechnet ein asynchroner Slave aus seiner Identifikationsnummer beispielsweise die Verzögerung, die er zwischen Auftreten eines Treffers und Abhören des Betriebskanals wartet.

Das vorstehende Ausführungsbeispiel ist rein exemplarisch und insofern nicht beschränkend. Dies bezieht sich insbesondere auf die angegebenen Werte für Zeitspannen, die beliebig an die Anforderungen des Netzwerkes, beispielsweise die Anzahl der Teilnehmer, das Frequenzband oder die Baudrate angepasst werden können. Ebenfalls dem implementierenden Fachmann überlassen sind die Häufigkeit und der Zeitpunkt der Bakenaussendung sowie des Abhörens des Assoziierungskanals.

## Patentansprüche

1. Kommunikationsverfahren zwischen Komponenten eines drahtlosen Kurzstreckennetzwerkes für eine Gefechtsfeldsimulation mit Waffen und Sensoren, wobei eine Komponente als Master und die anderen Komponenten (AC1 - AC10, SC1, SC2) als Slave ausgebildet sind, **dadurch gekennzeichnet, dass**
- die als Slaves ausgebildeten anderen Komponenten (AC1-AC10, SC1, SC2) in einem Betriebskanal synchron oder asynchron Daten an den Master übertragen,
- synchrone Slaves (SC1, SC2) der anderen Komponenten als Waffen Daten in ihnen fest zugeordneten Zeitfenstern(T1 - T10) senden und
- asynchrone Slaves (AC1 - AC10) der anderen Komponenten als Sensoren Daten ereignisbasiert senden.

2. Kommunikationsverfahren nach Anspruch 1, **dadurch gekennzeichnet, dass** die synchronen Slaves (Sc1, SC2) ihre Zeitbasis auf eine regelmäßig vom Master ausgesendete Bake synchronisieren.

3. Kommunikationsverfahren nach einem der Ansprüche 1 oder 2, **dadurch gekennzeichnet, dass** der Master den Betriebskanal regelmäßig für eine festgelegte Zeitspanne abhört.

4. Kommunikationsverfahren nach Anspruch 3, **dadurch gekennzeichnet, dass** der Master den Betriebskanal zu Beginn der Zeitfenster (T1 - T10) der synchronen Slaves (SC1, SC2) abhört.

5. Kommunikationsverfahren nach einem der Ansprüche 1 bis 4, **dadurch gekennzeichnet, dass** die Slaves (AC1 - AC10, SC1, SC2) auf dem Betriebskanal hören, bevor sie senden.

6. Kommunikationsverfahren nach Anspruch 5, **dadurch gekennzeichnet, dass** jeder Slave (AC1 - AC10, SC1, SC2) vor dem Abhören des Betriebskanals eine ihm zugeordnete Zeitspanne wartet.

7. Kommunikationsverfahren nach einem der Ansprüche 1 bis 6, **dadurch gekennzeichnet, dass** ein asynchroner Slave (AC1 - AC10) bei Auftreten eines Ereignisses Requests an dem Master sendet, bis der Master den Request beantwortet.

8. Kommunikationsverfahren nach Anspruch 7, **dadurch gekennzeichnet, dass** der Master nach Empfangen eines Requests eines asynchronen Slaves (AC1-AC10) sequentiell alle asynchronen Slaves (AC1 - AC10) zur Übertragung von Daten auffordert.

9. Kommunikationsverfahren nach einem der Ansprüche 1 bis 8, **dadurch gekennzeichnet, dass** der Master den Empfang von Daten von einem Slave (AC1-AC10, SC1, SC2) bestätigt.

10. Kommunikationsverfahren nach einem der Ansprüche 1 bis 9, **dadurch gekennzeichnet, dass** der Master regelmäßig einen Assoziierungskanal abhört.

11. Kommunikationsverfahren nach Anspruch 10, **dadurch gekennzeichnet, dass** ein zu assoziierender Slave (SC2) auf dem Assoziierungskanal Requests sendet, bis der Master antwortet.

12. Kommunikationsverfahren nach Anspruch 11, **dadurch gekennzeichnet, dass** der Slave (SC2) auf die Antwort des Masters im Assoziierungskanal Geräteinformationen an den Master sendet.

13. Kommunikationsverfahren nach Anspruch 12, **dadurch gekennzeichnet, dass** der Master dem zu assoziierenden Slave (SC2) Netzwerkinformationen sendet und eine Identifikationsnummer zuweist.

14. Netzwerkkomponente (AC1 - AC10, SC1, SC2) zur Durchführung des Kommunikationsverfahrens nach einem der Ansprüche 1 bis 13, **dadurch gekennzeichnet, dass** eine Komponente als Master und die anderen Komponenten (AC1 - AC10, SC1, SC2) als Slave ausgebildet sind, und einen Sensor, insbesondere einen IR-Sensor, einen Signalprozessor und ein Kurzstrecken-Funkmodul aufweist, wobei der Sensor als asynchroner Slave ausgebildet und drahtlos mit dem Master verbunden ist.

15. Netzwerkkomponente (AC1 - AC10, SC1, SC2) nach Anspruch 14, **dadurch gekennzeichnet, dass** die Netzwerkkomponente in einen Schlafmodus versetzbar ist, aus dem sie durch ein auf den Sensor treffendes Signal weckbar ist.

16. Netzwerkkomponente (AC1 - AC10, SC1, SC2) nach einem der Ansprüche 14 oder 15, **gekennzeichnet durch** einen Signalverstärker zur Verstärkung der Signale des Sensors.

## Claims

1. Communication method between components of a wireless short-range network for a battlefield simulation with weapons and sensors, one component being in the form of a master and the other components (AC1-AC10, SC1, SC2) being in the form of a slave, **characterized in that**
- the other components (AC1-AC10, SC1, SC2) in the form of slaves transmit data to the master synchronously or asynchronously in an operating channel,
- synchronous slaves (SC1, SC2) of the other components as weapons transmit data in time windows (T1-T10) fixedly assigned to them, and
- asynchronous slaves (AC1-AC10) of the other components as sensors transmit data in an event-based manner.

2. Communication method according to Claim 1, **characterized in that** the synchronous slaves (SC1, SC2) synchronize their time base with a beacon regularly emitted by the master.

3. Communication method according to either of Claims 1 and 2, **characterized in that** the master regularly listens in to the operating channel for a stipulated period of time.

4. Communication method according to Claim 3, **characterized in that** the master listens in to the operating channel at the start of the time windows (T1-T10) of the synchronous slaves (SC1, SC2).

5. Communication method according to one of Claims 1 to 4, **characterized in that** the slaves (AC1-AC10, SC1, SC2) listen on the operating channel before they transmit.

6. Communication method according to Claim 5, **characterized in that**, before listening in to the operating channel, each slave (AC1-AC10, SC1, SC2) waits for a period of time assigned to it.

7. Communication method according to one of Claims 1 to 6, **characterized in that**, if an event occurs, an asynchronous slave (AC1-AC10) transmits requests to the master until the master responds to the request.

8. Communication method according to Claim 7, **characterized in that**, after receiving a request from an asynchronous slave (AC1-AC10), the master sequentially requests all asynchronous slaves (AC1-AC10) to transmit data.

9. Communication method according to one of Claims 1 to 8, **characterized in that** the master confirms the reception of data from a slave (AC1-AC10, SC1, SC2).

10. Communication method according to one of Claims 1 to 9, **characterized in that** the master regularly listens in to an association channel.

11. Communication method according to Claim 10, **characterized in that** a slave (SC2) to be associated transmits requests on the association channel until the master responds.

12. Communication method according to Claim 11, **characterized in that** the slave (SC2) transmits device information to the master in the association channel in response to the response from the master.

13. Communication method according to Claim 12, **characterized in that** the master transmits network information and allocates an identification number to the slave (SC2) to be associated.

14. Network component (AC1-AC10, SC1, SC2) for carrying out the communication method according to one of Claims 1 to 13, **characterized in that** one component is in the form of a master and the other components (AC1-AC10, SC1, SC2) are in the form of a slave, and has a sensor, in particular an IR sensor, a signal processor and a short-range radio module, the sensor being in the form of an asynchronous slave and being wirelessly connected to the master.

15. Network component (AC1-AC10, SC1, SC2) according to Claim 14, **characterized in that** the network component can be changed to a sleep mode from which it can be woken by a signal reaching the sensor.

16. Network component (AC1-AC10, SC1, SC2) according to either of Claims 14 and 15, **characterized by** a signal amplifier for amplifying the signals from the sensor.

## Revendications

1. Procédé de communication entre les composants d'un réseau à courte portée pour une simulation de champ de bataille avec des armes et des capteurs, un composant étant réalisé en tant que maître et les autres composants (AC1 - AC10, SC1, SC2) en tant qu'esclaves, **caractérisé en ce que**
- les autres composants (AC1 - AC10, SC1, SC2) en tant qu'esclaves transmettent des données synchrones ou asynchrones au maître dans un canal de service,
- les esclaves synchrones (SC1, SC2) des autres composants, en tant qu'armes, envoient des données dans des créneaux temporels (T1 - T10) qui leur sont assignés à demeure et
- les esclaves asynchrones (AC1 - AC10) des autres composants, en tant que capteurs, envoient des données basées sur les événements.

2. Procédé de communication selon la revendication 1, **caractérisé en ce que** les esclaves synchrones (SC1, SC2) synchronisent leur base de temps sur une balise régulièrement émise par le maître.

3. Procédé de communication selon l'une des revendications 1 ou 2, **caractérisé en ce que** le maître écoute régulièrement le canal de service pendant un intervalle de temps défini.

4. Procédé de communication selon la revendication 3, **caractérisé en ce que** le maître écoute le canal de service au début des créneaux temporels (T1 - T10) des esclaves synchrones (SC1, SC2).

5. Procédé de communication selon l'une des revendications 1 à 4, **caractérisé en ce que** les esclaves (AC1 - AC10, SC1, SC2) écoutent le canal de service avant d'envoyer.

6. Procédé de communication selon la revendication 5, **caractérisé en ce que** chaque esclave (AC1 - AC10, SC1, SC2) attend pendant un intervalle de temps qui lui est assigné avant d'écouter le canal de service.

7. Procédé de communication selon l'une des revendications 1 à 6, **caractérisé en ce qu'**un esclave asynchrone (AC1 - AC10), lorsqu'un événement se produit, envoie des requêtes au maître jusqu'à ce que le maître réponde.

8. Procédé de communication selon la revendication 7, **caractérisé en ce que** la maître, après la réception d'une requête d'un esclave asynchrone (AC1 - AC10), invite séquentiellement à tous les esclaves asynchrones (AC1 - AC10) à transmettre des données.

9. Procédé de communication selon l'une des revendications 1 à 8, **caractérisé en ce que** le maître confirme la réception des données de la part d'un esclave (AC1 - AC10, SC1, SC2).

10. Procédé de communication selon l'une des revendications 1 à 9, **caractérisé en ce que** le maître écoute régulièrement un canal d'association.

11. Procédé de communication selon la revendication 10, **caractérisé en ce qu'**un esclave (SC2) à associer envoie des requêtes sur le canal d'association jusqu'à ce que le maître réponde.

12. Procédé de communication selon la revendication 11, **caractérisé en ce que** l'esclave (SC2), sur réponse du maître dans le canal d'association, envoie des informations d'appareil au maître.

13. Procédé de communication selon la revendication 12, **caractérisé en ce que** le maître envoie des informations de réseau à l'esclave (SC2) à associer et lui attribue un numéro d'identification.

14. Composant de réseau (AC1 - AC10, SC1, SC2) destiné à mettre en oeuvre le procédé de communication selon l'une des revendications 1 à 13, **caractérisé en ce qu'**un composant est configuré en tant que maître et les autres composants (AC1 - AC10, SC1, SC2) en tant qu'esclaves, et possède un capteur, notamment un capteur d'infrarouges, un processeur de signal et un module radioélectrique de courte portée, le capteur étant configuré en tant qu'esclave asynchrone et étant relié sans fil avec le maître.

15. Composant de réseau (AC1 - AC10, SC1, SC2) selon la revendication 14, **caractérisé en ce que** le composant de réseau peut être amené dans un mode de veille depuis lequel il peut être sorti par un signal incident sur le capteur.

16. Composant de réseau (AC1 - AC10, SC1, SC2) selon l'une des revendications 14 ou 15, **caractérisé par** un amplificateur de signal destiné à amplifier les signaux du capteur.
